# FASCICULE DE BREVET EUROPEEN

(11) **EP 4 156 102 B1**
(45) Date de publication et mention de la délivrance du brevet: **17.01.2024**
(21) Numéro de dépôt: 22195952.1
(22) Date de dépôt: 15.09.2022
(51) Int. Cl.: G06T 7/593, G06T 17/05, G06V 20/13, G06V 10/762

(54) **PROCÉDÉ DE SÉLECTION DE PAIRES STÉRÉOSCOPIQUES D'IMAGES AÉRIENNES OU SATELLITE POUR GÉNÉRER DES DONNÉES D ÉLÉVATION**
VERFAHREN ZUR AUSWAHL VON STEREOSKOPISCHEN PAAREN VON LUFT- ODER SATELLITENBILDERN ZUR ERZEUGUNG VON HÖHENDATEN
SELECTION METHOD FOR PAIRS OF STEREOSCOPIC OR SATELLITE AERIAL IMAGES FOR GENERATING ALTITUDE DATA

(30) Priorité: 22.09.2021 FR 2109950
(43) Date de publication de la demande: 29.03.2023
(73) Titulaire: Airbus Defence and Space SAS, 31402 Toulouse Cedex 4 (FR)
(72) Inventeur: CHEULA, Antoine, 31400 TOULOUSE (FR); CHRETIEN, Benjamin, 31400 TOULOUSE (FR); GARCIA, Emmanuel, 31400 TOULOUSE (FR); NONIN, Philippe, 31400 TOULOUSE (FR)
(74) Mandataire: Ipside

(56) Documents cités:
- US-B2- 9 430 872
- FACCIOLO GABRIELE ET AL: "Automatic 3D Reconstruction from Multi-date Satellite Images", 2017 IEEE CONFERENCE ON COMPUTER VISION AND PATTERN RECOGNITION WORKSHOPS (CVPRW), IEEE, 21 juillet 2017 (2017-07-21), pages 1542-1551, XP033145940, DOI: 10.1109/CVPRW.2017.198
- GONG K. ET AL: "POINT CLOUD AND DIGITAL SURFACE MODEL GENERATION FROM HIGH RESOLUTION MULTIPLE VIEW STEREO SATELLITE IMAGERY", THE INTERNATIONAL ARCHIVES OF THE PHOTOGRAMMETRY, REMOTE SENSING AND SPATIAL INFORMATION SCIENCES , vol. XLII-2 juin 2018 (2018-06), pages 363-370, XP055918442, DOI: 10.5194/isprs-archives-XLII-2-363-2018 Extrait de l'Internet: URL:https://www.int-arch-photogramm-remote -sens-spatial-inf-sci.net/XLII-2/363/2018/ isprs-archives-XLII-2-363-2018.pdf
- ELIBOL ARMAGAN ET AL: "Fast Underwater Image Mosaicing through Submapping", JOURNAL OF INTELLIGENT, SPRINGER NETHERLANDS, DORDRECHT, vol. 85, no. 1, 28 mai 2016 (2016-05-28), pages 167-187, XP036127720, ISSN: 0921-0296, DOI: 10.1007/S10846-016-0380-X [extrait le 2016-05-28]
- XU ZHIHUA ET AL: "Skeletal camera network embedded structure-from-motion for 3D scene reconstruction from UAV images", ISPRS JOURNAL OF PHOTOGRAMMETRY AND REMOTE SENSING, AMSTERDAM [U.A.] : ELSEVIER, AMSTERDAM, NL, vol. 121, 10 octobre 2016 (2016-10-10), pages 113-127, XP029789133, ISSN: 0924-2716, DOI: 10.1016/J.ISPRSJPRS.2016.08.013

## Description

### DOMAINE TECHNIQUE

La présente invention appartient aux domaines de la stéréométrie et de la photogrammétrie, notamment de la photogrammétrie aérienne, et concerne plus particulièrement un procédé de sélection de paires stéréoscopiques d'images aériennes ou satellite pour générer des données d'élévation telles que des modèles numériques d'élévation (MNE), plus connus sous le sigle anglosaxon DEM (*Digital Elevation Model*)*.*

La présente invention trouve une application directe, mais non exclusive, dans la génération de modèles numériques d'élévation utilisés en topographie, en cartographie 3D, en géographie physique et plus généralement dans différentes analyses de surfaces et de terrains.

### ÉTAT DE L'ART

La photogrammétrie aérienne comprend l'ensemble des techniques employées pour aboutir à la représentation d'un territoire étendu, à partir de prises de vues aériennes numériques, issues de caméras embarquées principalement dans des drones ou des avions, ou d'images spatiales prises par un ou plusieurs satellites.

Les différentes techniques de photogrammétrie reprennent le principe de l'observation stéréoscopique et consistent globalement à exploiter des images d'une zone d'intérêt, acquises selon des points de vue différents afin de reconstituer le relief de ladite zone à partir de cette différence de points de vue.

Cette reconstitution 3D fait appel à des outils spécifiques pour générer des modèles numériques d'élévation à partir d'un nombre déterminé de paires stéréo d'images choisies parmi un ensemble d'images capturées recouvrant, totalement ou partiellement, la zone d'intérêt.

Toutefois, la sélection des paires stéréo peut être une tâche délicate, voire complexe, car elle consiste à ne garder que les paires les plus pertinentes pour le calcul d'élévation. Cela dit, plus le nombre d'images dans l'ensemble est grand plus la sélection des paires devient compliquée et risque d'être insuffisante pour la génération d'un modèle d'élévation selon la précision souhaitée.

De plus, il est souvent préférable de limiter le nombre de paires utilisées pour ménager les capacités de calcul disponibles et réduire le temps de traitement.

Il existe des méthodes permettant de sélectionner et de minimiser le nombre de paires stéréo choisies parmi un ensemble d'images afin de construire des modèles numériques d'élévation, des modèles 3D, des nuages de points XYZ ou tout type de données d'élévation. Parmi les recherches les plus avancées et les plus notables dans ce domaine, figurent celles publiées par Facciolo (Facciolo et al, 2017) et Becker (Becker et al, 2015).

G. Facciolo et al., "Automatic 3D Reconstruction from Multi-date Satellite Images", IEEE Conférence on Computer Vision and Pattern Recognition Workshops (CVPRW), 21 de juillet 2017, propose un algorithme pour calculer une reconstitution 3D à partir d'une collection d'images satellite d'un même site. En se basant sur l'approximation affine locale de la caméra, cette méthode permet de calculer des modèles 3D indépendamment des paires d'images originales, puis d'aligner les modèles par des translations 3D. Facciolo propose ainsi une heuristique pour sélectionner les meilleures paires d'images à partir d'une grande base de données, et conclut que le résultat optimal est obtenu en gardant seulement quelques paires bien choisies à partir de l'ensemble de toutes les paires possibles.

Ce genre de méthode vise à trier toutes les paires possibles en fonction de leur qualité, et ne traite que les premiers éléments de la liste obtenue. Cela est en théorie efficace pour sélectionner les paires les plus pertinentes pour tout processus de photogrammétrie, mais ne fait appel à aucun algorithme approprié permettant de minimiser la quantité de paires stéréo sans s'assurer d'une couverture suffisante pour le calcul d'élévation.

En outre:K.

Gong and D. Fritsch, "Point Cloud and Digital Surface Model Génération from High Resolution Multiple View Stéréo Satellite Imagery", ISPRS International Archives of the Photogrammetry, Remote Sensing and Spatial Information Sciences, Volume XLII-2, 2018, pp. 363-370, mai 2018, divulgue la considération de toutes les paires possibles comme des paires potentielles, filtrées à l'aide de l'angle d'incidence, de la séparation temporelle et des angles de chevauchement;

A. Elibor et al., "Fast Underwater Image Mosaicing through Submapping", Journal of Intelligent & Robotic Systems vol. 85, pp. 167-187, 28 mai 2016, consacré à l'imagerie sous-marine, effectuent un regroupement d'images en fonction de leur similarité par paire basée sur les caractéristiques de l'image;

Z. Xu et al., "Skeletal caméra network embedded structure-from-motion for 3D scène reconstruction from UAV images", ISPRS Journal of Photogrammetry and Remote Sensing, vol. 121, pp. 113-127, novembre 2016, divulgue la création d'un réseau de caméras topologiquement connectées pour les prises de vue à partir d'un drone en utilisant "skinning";

et US 9430872 B2 recherche des paires d'images correspondantes ou des clusters sur la base d'un ensemble hiérarchique de conditions.

### PRÉSENTATION DE L'INVENTION

Il convient de rappeler que la sélection de paires stéréo est la toute première étape de tout pipeline stéréo standard traité pour la génération de données d'élévation. Par données d'élévation, il doit être entendu des modèles 3D (réseaux triangulaires irréguliers, texturés ou non), des modèles numériques d'élévation, des modèles vectoriels 3D, des nuages de points, etc.

La présente invention vise à pallier les inconvénients de l'art antérieur exposés ci-avant et propose une heuristique de sélection de paires stéréo permettant de choisir parmi toutes les combinaisons possibles d'un ensemble d'images satellite ou aériennes les meilleures paires stéréo pour effectuer des calculs d'élévation. Les meilleures paires étant identifiées, une méthode de minimisation permet alors d'éliminer les redondances de la sélection.

À cet effet, la présente invention a pour objet un procédé de sélection de paires stéréo d'images satellite ou aériennes pour générer des données d'élévation d'une zone d'intérêt, ledit procédé étant mis en oeuvre par ordinateur et comprenant une phase de sélection de paires stéréo admissibles à partir d'un ensemble initial d'images représentant la zone d'intérêt, suivie d'une phase de classement des paires stéréo sélectionnées en fonction de leur qualité. Ce procédé est remarquable en ce qu'il comprend en outre une phase de définition de N clusters d'images, avec N entier supérieur ou égal à 2, regroupant chacun des images de l'ensemble initial selon un critère de ressemblance, et une phase de sélection, pour chaque cluster défini, des meilleures paires stéréo appartenant audit cluster en se basant sur le classement établi lors de la phase de classement et sur le fait qu'une paire est considérée comme appartenant à un cluster si les deux images de ladite paire appartiennent audit cluster.

Selon un mode de réalisation avantageux, le critère de ressemblance permettant de définir les clusters d'images correspond à un couple d'angles (θ, Φ), avec θ l'angle d'incidence des images et Φ l'angle d'azimut.

De façon particulièrement avantageuse, la phase de définition des clusters est réalisée par un algorithme de partitionnement de données tel qu'un algorithme de propagation d'affinité.

Afin de limiter l'intervention d'un opérateur humain et d'automatiser davantage le procédé, la phase de sélection des meilleures paires par cluster consiste à sélectionner le même nombre de paires par cluster.

Selon un mode de réalisation, les meilleures paires sélectionnées lors de la phase de sélection des meilleures paires par cluster sont agrégées dans une liste finale.

Cela permet de sauvegarder cette liste pour pouvoir la réutiliser en cas de besoin, notamment pour affiner la sélection des paires en augmentant le nombre de meilleures paires par cluster par exemple.

La présente invention a également pour objet un procédé photogrammétrique générant un modèle d'élévation d'une zone d'intérêt à partir d'un ensemble initial d'images recouvrant ladite zone d'intérêt, comprenant un procédé de sélection de paires stéréo d'images à partir dudit ensemble initial d'images tel que présenté.

La présente invention a également pour objet un système de calcul de données d'élévation d'une zone d'intérêt à partir d'un ensemble d'images satellite ou aérienne, comprenant des moyens de calcul, tels qu'un ou plusieurs ordinateurs, configurés pour mettre en oeuvre un procédé de sélection de paires stéréo tel que présenté.

La présente invention a également pour objet un produit programme d'ordinateur téléchargeable depuis un réseau de communication et/ou stocké sur un support lisible par microprocesseur et/ou exécutable par un microprocesseur, comprenant des instructions de code de programme pour l'exécution d'un procédé de sélection de paires stéréo tel que présenté.

La présente invention a également pour objet un médium de stockage non transitoire lisible par un terminal, stockant un programme d'ordinateur comprenant un jeu d'instructions exécutables par un ordinateur ou un processeur pour mettre en oeuvre un procédé de sélection de paires stéréo tel que présenté.

Un avantage de la présente invention est d'améliorer les performances et la robustesse du pipeline stéréo standard pour la génération de données d'élévation.

Un autre avantage de la présente invention est d'améliorer la qualité des sorties générées par un pipeline stéréo standard pour la génération de données d'élévation.

Un autre avantage de la présente invention est de réduire de manière significative le coût de traitement d'un pipeline stéréo standard pour la génération de données d'élévation.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif un mode de réalisation d'un procédé de sélection de paires stéréo conforme aux principes de l'invention.

### BRÈVE DESCRIPTION DES FIGURES

Les figures sont données à titre purement illustratif pour une meilleure compréhension de l'invention sans limiter sa portée. Les différents éléments sont représentés de manière schématique. Sur l'ensemble des figures, les éléments identiques ou équivalents portent la même référence numérique.

Il est ainsi illustré en :
- Figure 1 : un organigramme simplifié d'un procédé photogrammétrique de l'art antérieur comprenant une étape standard de sélection de paires stéréo pour la génération de données d'élévation ;
- Figure 2 : un aperçu d'un procédé de sélection de paires stéréo parmi un ensemble d'images, selon l'invention ;
- Figure 3 : un synoptique de la mise en oeuvre du procédé selon un mode de réalisation de l'invention ;
- Figure 4 : un organigramme de programmation du procédé, donnant une vue détaillée de l'algorithme ;
- Figure 5 : un schéma d'une acquisition satellite ou aérienne d'une zone d'intérêt donnée ;
- Figure 6 : un schéma des vues et des angles du soleil d'une acquisition satellite ou aérienne ;
- Figure 7 : un schéma de la superposition au sol de deux images satellite ou aériennes montrant une zone de chevauchement ;
- Figure 8 : un exemple de vues groupées positionnées sur une sphère unitaire et classées dans des clusters ;
- Figure 9 : un exemple d'empreintes de paires stéréo sélectionnées sans minimisation (41 paires) en (a) et avec minimisation sur le même jeu de données d'entrée (16 paires) en (b).

### DESCRIPTION DÉTAILLÉE DE MODES DE RÉALISATION

Il convient de noter que certains éléments techniques bien connus de l'homme du métier sont ici décrits pour éviter toute insuffisance ou ambiguïté dans la compréhension de la présente invention.

Dans le mode de réalisation décrit ci-après, on fait référence à un procédé de sélection de paires stéréo d'images satellite ou aériennes, destiné principalement à la génération de données d'élévation d'une zone d'intérêt. Cet exemple, non limitatif, est donné pour une meilleure compréhension de l'invention et n'exclut pas l'utilisation des principes de l'invention dans d'autres exploitations d'images.

Dans la présente description, l'expression « paire stéréo » désigne par contraction une paire stéréoscopique d'images, à savoir une combinaison de deux images d'une même scène obtenues par deux capteurs optiques différents selon deux points de vue différents. Le terme « image » renvoie quant à lui à des données, brutes ou traitées, issues d'un dispositif d'imagerie aérienne ou spatiale comprenant au moins un capteur optique. Un tel dispositif d'imagerie est par exemple une caméra embarquée dans un aéronef de reconnaissance ou dans un satellite d'observation. Enfin, l'expression « zone d'intérêt » désigne une zone étendue à la surface de la Terre ou d'une autre planète selon l'application visée.

Préalablement à une description détaillée de la présente invention, le principe général d'une génération d'informations d'élévation à partir de paires stéréo d'images, communément appelé « pipeline stéréo », est rappelé ci-après.

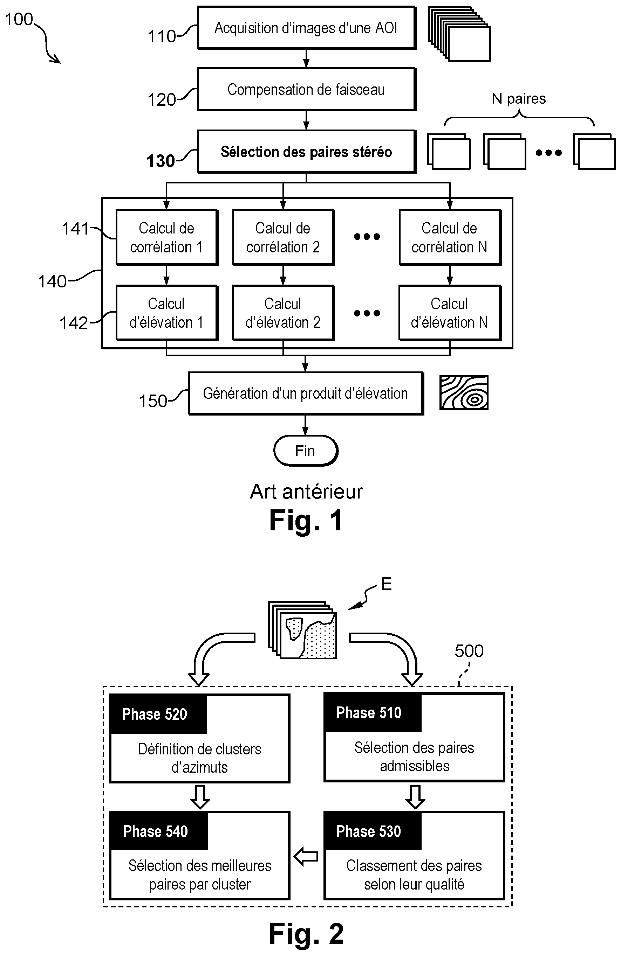

La figure 1 représente un procédé 100 connu de génération d'informations d'élévation à partir d'une pluralité d'images représentant une zone d'intérêt donnée, ledit procédé comprenant :
- une étape 110 d'acquisition d'images d'une zone d'intérêt AOI (*Area Of Interest*) ;
- une étape 120 de compensation de faisceau pour une meilleure estimation du modèle de capteur de chaque image ;
- une étape 130 de sélection, parmi toutes les images, des paires stéréo qui seront utilisées dans le calcul d'élévation ;
- une étape 140 de calcul d'informations d'élévation pour chacune des paires stéréo sélectionnées ; et
- une étape 150 de génération d'un produit d'élévation.

L'étape 110 d'acquisition d'images consiste à capturer plusieurs images de la zone d'intérêt, par au moins deux capteurs distants selon différents points de vue et/ou par un même capteur mobile pointant vers la zone d'intérêt à différentes dates, et permet ainsi de constituer un ensemble d'images stéréo de la zone d'intérêt qui représentent un certain nombre de points 3D suivant différents points de vue. Les images seront ensuite exploitées pour générer des informations d'élévation de la zone d'intérêt. Cette étape d'acquisition d'images peut bien entendu être accompagnée d'un tri des images tenant compte de différents aléas, notamment météorologiques (couverture nuageuse, enneigement et variation de la végétation selon les saisons, etc.), pour n'en garder que les images de bonne qualité permettant d'obtenir des informations d'élévation avec une grande précision.

L'étape 120 de compensation de faisceau est bien connue dans l'art et consiste globalement à affiner simultanément les coordonnées 3D décrivant la géométrie de la zone d'intérêt, les paramètres du mouvement relatif et les caractéristiques optiques de la ou des caméras utilisées pour capturer les images telles que les positions des caméras ou leurs fonctions de navigation. Cette compensation est effectuée selon un critère d'optimisation impliquant les projections des images de tous les points. L'étape de compensation de faisceau est importante en raison de la différence qui existe inévitablement entre les paramètres des différentes caméras utilisées, surtout lorsque chaque caméra est embarquée dans un satellite différent. L'étape 130 de sélection des paires stéréo consiste à identifier et à retenir un sous-ensemble de paires parmi l'ensemble de toutes les paires possibles afin de réaliser les calculs d'élévation. Les paires stéréo sélectionnées correspondent par exemple à un nombre déterminé de meilleures paires parmi l'ensemble des paires possibles. Ainsi, un classement qualitatif de toutes les paires possibles peut être établi et seules les N meilleures paires sont sélectionnées, avec N un nombre entier donné. Le procédé 100 se poursuit alors par des calculs d'élévation réalisés pour chacune des paires sélectionnées.

L'étape 140 de calcul d'informations d'élévation consiste en un calcul de corrélation 141 (carte de disparité) suivi d'un calcul d'élévation 142 pour chaque paire stéréo sélectionnée.

Enfin, l'étape 150 de génération du produit d'élévation consiste à agréger toutes les données d'élévation calculées pour l'ensemble des paires stéréo sélectionnées afin d'obtenir un produit d'élévation qui peut être sous forme de modèle 3D, de modèle numérique d'élévation, de nuage de points, etc.

Dans ce cadre, la présente invention propose d'améliorer le processus de sélection des paires stéréo utilisées, pour augmenter l'efficacité et la précision des calculs d'élévation tout en réduisant leur coût.

La figure 2 représente le principe général de mise en oeuvre d'un procédé 500 de sélection de paires stéréo pour la génération de données d'élévation selon l'invention, ledit procédé se déroulant suivant quatre phases : une phase 510 de sélection des paires admissibles ; une phase 520 de définition de clusters de vision ; une phase 530 de tri des paires sélectionnées en fonction de leur qualité ; et une phase 540 de sélection des meilleures paires par cluster.

Les phases initiales 510 de sélection des paires admissibles et 520 de définition de clusters sont indépendantes l'une de l'autre et peuvent être réalisées sans ordre préférentiel, voire simultanément, en exploitant directement toutes les images d'un ensemble d'images E recouvrant la zone d'intérêt étudiée. En revanche, la phase intermédiaire 530 de tri qualitatif des paires doit être réalisée après la phase 510. La phase finale 540 de sélection des meilleures paires par cluster découle quant à elle des phases 520 et 530 et leur succède pour terminer le procédé 500 de sélection des paires.

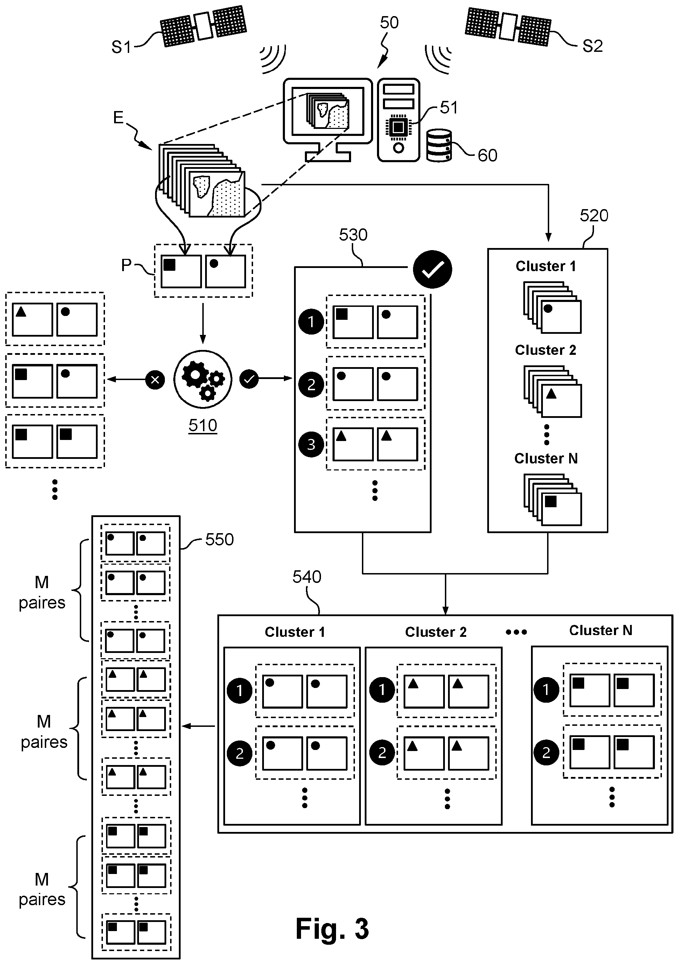

La figure 3 représente un schéma synoptique de la mise en oeuvre des phases précitées du procédé de sélection des paires pour générer des données d'élévation. Dans cet exemple, le procédé de sélection est mis en oeuvre à partir d'un ensemble E d'images d'une zone d'intérêt capturées par deux satellites S1 et S2.

Pour sélectionner les paires stéréo d'images admissibles selon la phase 510, chaque paire possible P, constituée d'une combinaison de deux images quelconques de l'ensemble E, est soumise à un ensemble de tests visant à déterminer si ladite paire est admissible et doit donc être sélectionnée, ou non admissible auquel cas elle sera écartée. Les tests sont à arborescence et consistent à vérifier plusieurs critères géométriques qui seront détaillés plus loin dans la description.

Toute paire sélectionnée à l'issu des tests, autrement dit toute paire vérifiant tous les critères requis, est alors ajoutée à la liste des paires admissibles. Les paires admissibles sont ensuite classées, au sein de cette liste, selon leur qualité lors de la phase de classement 530.

Parallèlement aux phases de sélection 510 et de classement 530 des paires stéréo, s'opère la phase 520 de définition de clusters d'images selon un critère de ressemblance donné qui, par exemple, peut dépendre d'un ou de plusieurs angles relatifs aux images.

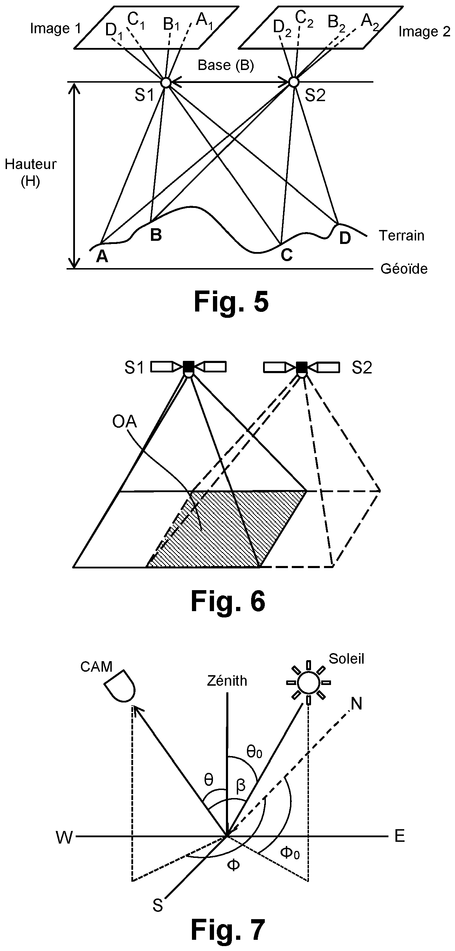

En référence à la figure 7, le critère de ressemblance choisi est un couple d'angles (θ, Φ) dans lequel θ est l'angle d'incidence (*incidence angle*) et Φ l'angle d'azimut (*azimuth viewing angle*)*.*

L'angle d'incidence θ représente, du point de vue de la cible, l'angle entre la normale au sol et la direction de visée du satellite, en combinant les angles de tangage et de roulis. Cet angle est équivalent, du point de vue du satellite, à l'angle de visée (*viewing angle*) et peut donc être remplacé par ce dernier dans le couple définissant le critère de ressemblance.

Durant cette phase, les images de l'ensemble E sont réparties dans différents clusters en fonction de leurs angles d'incidence et d'azimut. Sur la figure 3, chaque cluster correspond à un motif géométrique différent (rond, triangle, carré) représentant une certaine valeur ou plage de valeurs des angles d'incidence et d'azimut.

Bien entendu, une image peut parfaitement se retrouver dans plusieurs clusters à la fois.

La définition des clusters est réalisée à l'aide d'un algorithme de partitionnement de données (*clustering*) tel qu'un algorithme de propagation d'affinité. Le nombre N de clusters peut être défini automatiquement par l'algorithme ou paramétré manuellement par l'utilisateur.

Partant de la définition des clusters et de la liste ordonnée des paires stéréo obtenues respectivement lors des phases 520 et 530, le procédé de sélection des paires s'achève en sélectionnant les meilleures paires par cluster lors de la phase 540. Pour qu'une paire stéréo appartienne à un cluster, il est nécessaire que les deux images de ladite paire appartiennent audit cluster.

Par conséquent, pour un ensemble E de n images, au lieu d'utiliser toutes les paires stéréo possibles qui sont au nombre de n*(n-1)/2 (combinaison de 2 parmi n), seules les meilleures paires stéréo par cluster sont utilisées. Ainsi le nombre de paires utilisées peut être très inférieur au nombre total de paires possibles.

Par exemple, pour un ensemble de 100 images (nombre courant dans les jeux d'images satellite), les inventeurs ont constaté que 16 paires seulement, obtenues avec la définition de 4 clusters et la sélection de 4 paires par cluster, sont suffisantes pour obtenir un calcul d'élévation précis, alors que le nombre de toutes les paires possibles est de 4950 (=100*99/2).

En outre, les solutions antérieures proposent de réduire la liste des paires à traiter en sélectionnant un nombre donné des meilleures paires de la liste de toutes les paires, ce qui ne garantit pas la sélection des paires les plus pertinentes dans le calcul d'élévation.

De ce fait, si le nombre des paires sélectionnées devait être fixé pour une quelconque raison (temps de traitement par exemple), le procédé de la présente invention fournirait des paires plus pertinentes que les procédés connus car il se base sur un partitionnement des meilleures paires par clusters.

Ainsi, la réduction de la liste finale 550 des paires selon l'invention permet d'un côté de sélectionner les meilleures paires stéréo et en corollaire d'écarter les paires qui ne sont pas pertinentes et qui pourraient générer du bruit dans les résultats de sortie, et d'un autre côté d'éviter les redondances et d'assurer des performances de traitement acceptables.

Bien entendu, la sélection des paires ne se fait pas systématiquement parmi toutes les combinaisons possibles, mais tient compte de l'élimination des objets hors du cône de vue.

L'élimination des objets hors cône de vue est un niveau de détermination des surfaces cachées, selon lequel le *viewing frustum* est la représentation du volume visible par la caméra. Naturellement, les objets en dehors de ce volume ne seront pas visibles, donc pas affichés. Les objets à cheval sur ce volume seront découpés en morceaux plus petits dans un processus appelé *clipping* (découpage), et les morceaux en dehors du volume ne seront pas affichés.

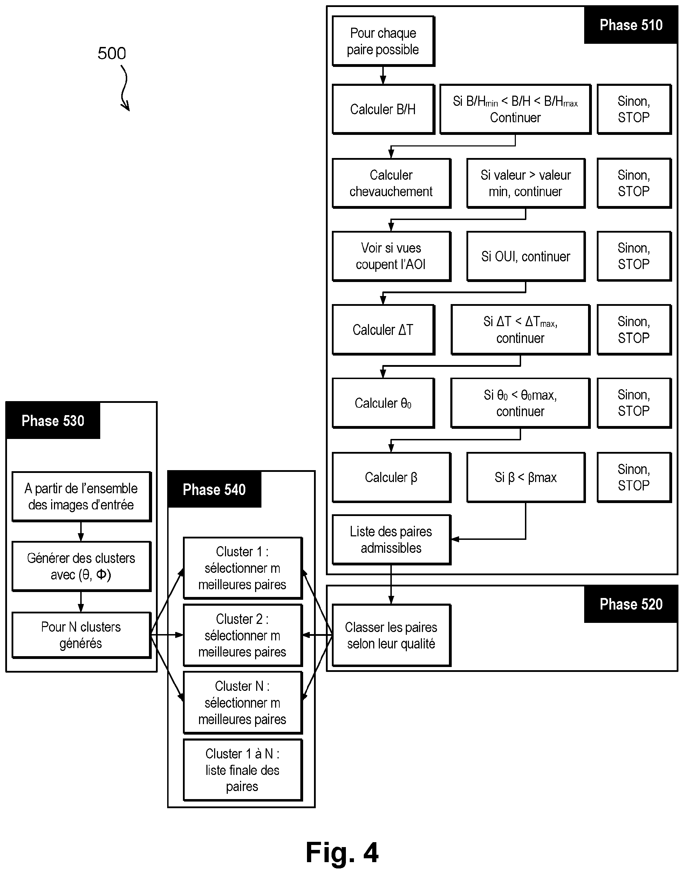

La figure 4 représente plus en détail les différentes phases du procédé 500 de sélection des paires pour générer des données d'élévation, afin de mieux illustrer l'implémentation de l'algorithme permettant de mettre en oeuvre ledit procédé.

La première partie de l'algorithme de sélection des paires consiste à identifier les paires admissibles, c'est-à-dire à écarter les paires qui ne seront pas en mesure de produire des informations d'élévation de bonne qualité. Les mauvaises paires sont éliminées selon une heuristique basée sur les expériences des utilisateurs et l'arborescence de plusieurs conditions.

Selon l'exemple de réalisation illustré, pour chaque paire possible, autrement dit pour chaque combinaison de deux images de la zone d'intérêt qui se chevauchent, l'algorithme de la phase 510 de sélection des paires admissibles s'opère comme suit :
- Si le rapport B/H, avec B la base et H la hauteur, est compris entre une valeur minimale et une valeur maximale fournies par l'utilisateur, continuer.
- Si la valeur de chevauchement dépasse une valeur minimale fournie par l'utilisateur, continuer.
- Si les deux images qui se chevauchent coupent la zone d'intérêt, continuer.
- Si le temps passé entre les deux acquisitions ΔT ne dépasse pas une valeur maximale fournie par l'utilisateur, continuer.
- Si l'angle zénithal du soleil θ₀ ne dépasse pas une valeur maximale fournie par l'utilisateur, continuer.
- Si l'angle solaire du capteur β ne dépasse pas une valeur maximale fournie par l'utilisateur, continuer.
- Ajouter la paire à la liste des paires admissibles.

La figure 5 illustre le principe de la vision stéréo qui correspond à la capacité d'extraire des informations d'élévation à partir de paires d'images dont chacune comprend deux images prises sous différents angles de caméra. En référence à cette figure, il convient de noter que la base B représente la distance entre les deux caméras lors de l'acquisition des images, ici les deux caméras sont embarquées dans les satellites S1 et S2, et la hauteur H correspond à l'élévation moyenne des caméras pendant l'acquisition.

La figure 6 représente un chevauchement OA (*Overlaping Area*) entre deux images prises par les satellites S1 et S2, qui peut être défini comme la surface d'une image qui recouvre une partie de l'autre image.

La figure 7 représente les angles intervenant dans les conditions de la phase 510 de sélection des paires admissibles. L'angle zénithal solaire θ₀ correspond à l'angle entre les rayons du soleil et la direction verticale au centre de l'image, et l'angle solaire du capteur β correspond à l'angle défini par la direction d'incidence de la caméra et la direction d'incidence du soleil.

Après la phase 510 de sélection des paires admissibles, un classement desdites paires selon leur qualité est effectué lors de la phase 530 comme représenté sur la figure 4.

En effet, après que toutes les paires non pertinentes aient été écartées, toutes les paires admissibles sélectionnées sont triées afin d'évaluer lesquelles sont les plus pertinentes. Pour cela, une heuristique définie par l'utilisateur peut être utilisée, celle-ci prenant par exemple en compte principalement une distance avec un rapport B/H optimal et un écart de temps Δt minimal. Ensuite, la liste des paires admissibles établie lors de la phase 510 précédente est classée selon une qualité décroissante.

La phase 520 de définition des clusters est quant à elle indépendante des phases 510 de sélection et 530 de classement des paires. L'algorithme correspondant est également indépendant des algorithmes des phases 510 et 530. Son but est d'agréger les différents points de vue de l'ensemble des images d'entrée dans des clusters d'orientation (ou de vision) similaire (voir angles θ et Φ sur la figure 7). La définition des clusters est réalisée en utilisant un algorithme de propagation d'affinité et en prenant comme critère de ressemblance les angles d'incidence et d'azimut. Le nombre de clusters est aléatoire et défini en fonction des spécificités du jeu de données. L'utilisateur peut choisir s'il autorise qu'une vue puisse appartenir à un ou plusieurs clusters.

Enfin, la dernière étape de l'algorithme consiste à sélectionner les meilleures paires par cluster. Pour chaque cluster de vision, les M meilleures paires sont choisies, avec M entier défini par l'utilisateur. Une paire appartient à un cluster si les deux images de la paire sont incluses dans ledit cluster.

La combinaison des phases 520 de définition des clusters et 540 de sélection des meilleures paires par cluster permet avantageusement de minimiser le nombre de paires stéréo tout en s'assurant de la couverture de la zone d'intérêt avec les angles de vue, contrairement aux solutions antérieures qui cherchent juste à sélectionner les meilleures paires stéréo, sans prendre en compte la couverture des angles de visée.

Dans le cas de la présente invention, les paires stéréo dont les angles d'acquisition ou les écarts de temps d'acquisition ne sont pas pertinents sont éliminées de manière connue. Toutefois, les phases 520 et 540 permettent de retrouver les meilleures paires stéréo pour des angles d'incidence et d'azimut donnés ou une plage donnée desdits angles.

### Exemple :

Pour un jeu de données de 100 images de la zone d'intérêt, le nombre de paires stéréo possibles est de 4950 (=100x99/2) comme souligné ci-avant.

Il peut être admis que, compte tenu d'une heuristique utilisateur restrictive, seules 100 paires seront considérées comme pertinentes (sélection des paires admissibles) et seront classées en fonction de leur qualité. Grâce à la présente invention, basée sur un système de vue en clusters et un classement des paires par cluster, il est possible de ne sélectionner que 16 paires qui sont suffisantes pour obtenir un produit d'élévation de qualité.

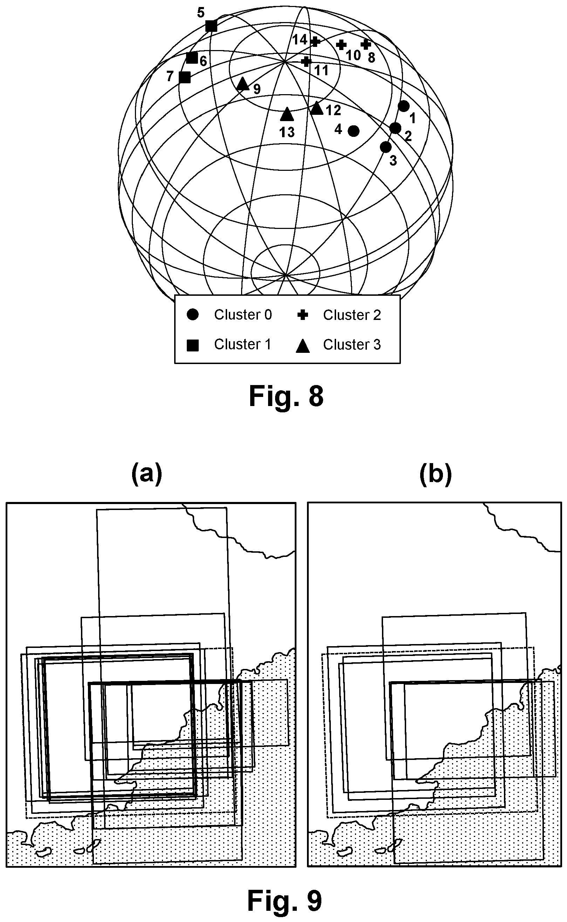

La figure 8 représente un exemple simplifié de définition de 4 clusters de vision pour un ensemble de 14 images. Dans cet exemple, l'image 4 peut appartenir à la fois au cluster 0 et au cluster 3.

La figure 9 représente un exemple d'empreintes au sol, sur la zone d'intérêt, de paires stéréo sélectionnées sans minimisation (41 paires) en (a) et avec minimisation sur le même jeu de données d'entrée (16 paires) en (b), et permet donc de rendre compte de la suppression de toutes les paires non pertinentes, essentiellement redondantes, dans le calcul d'élévation.

Il ressort clairement de la présente description que certaines étapes peuvent être ajoutées au procédé de sélection de paires stéréo selon l'invention, sans pour autant sortir du cadre de l'invention, qui est définie par l'ensemble des revendications annexées.

## Revendications

1. Procédé (500) de sélection de paires stéréo d'images satellite ou aériennes pour générer des données d'élévation d'une zone d'intérêt, ledit procédé étant mis en oeuvre par ordinateur et comprenant une phase (510) de sélection de paires stéréo admissibles à partir d'un ensemble initial d'images représentant la zone d'intérêt, suivie d'une phase (530) de classement des paires stéréo sélectionnées en fonction de leur qualité, ledit procédé étant **caractérisé en ce qu'**il comprend en outre une phase (520) de définition de N clusters d'images, avec N entier supérieur ou égal à 2, regroupant chacun des images de l'ensemble initial selon un critère de ressemblance, et une phase (540) de sélection des meilleures paires stéréo par cluster en se basant sur le classement établi lors de la phase (530) de classement et sur le fait qu'une paire appartient à un cluster si les deux images de ladite paire appartiennent audit cluster.

2. Procédé selon la revendication 1, dans lequel le critère de ressemblance correspond à un couple d'angles (θ, Φ), avec θ l'angle d'incidence des images et Φ l'angle d'azimut.

3. Procédé selon la revendication 1 ou 2, dans lequel la phase (520) de définition des clusters est réalisée par un algorithme de partitionnement de données tel qu'un algorithme de propagation d'affinité.

4. Procédé selon l'une quelconque des revendications précédentes, dans lequel la phase (540) de sélection des meilleures paires par cluster consiste à sélectionner le même nombre de paires par cluster.

5. Procédé selon l'une quelconque des revendications précédentes, dans lequel les meilleures paires sélectionnées lors de la phase (540) de sélection des meilleures paires par cluster sont agrégées dans une liste finale (550).

6. Procédé photogrammétrique générant un modèle d'élévation d'une zone d'intérêt à partir d'un ensemble initial d'images recouvrant ladite zone d'intérêt, **caractérisé en ce qu'**il comprend un procédé (500) selon l'une des revendications 1 à 5.

7. Système de calcul de données d'élévation d'une zone d'intérêt à partir d'un ensemble d'images satellite ou aériennes, **caractérisé en ce qu'**il comprend des moyens de calcul (50) configurés pour mettre en oeuvre un procédé (500) selon l'une des revendications 1 à 5.

8. Produit programme d'ordinateur téléchargeable depuis un réseau de communication et/ou stocké sur un support lisible par microprocesseur et/ou exécutable par un microprocesseur (51), **caractérisé en ce qu'**il comprend des instructions de code de programme pour l'exécution d'un procédé (500) selon l'une des revendications 1 à 5.

9. Médium de stockage (60) lisible par un terminal et non transitoire, stockant un programme d'ordinateur comprenant un jeu d'instructions exécutables par un ordinateur ou un processeur pour mettre en oeuvre un procédé (500) selon l'une des revendications 1 à 5.

## Patentansprüche

1. Verfahren (500) zur Auswahl von stereoskopischen Paaren von Satelliten- oder Luftbildern, zur Erzeugung von Höhendaten eines Interessengebiets, wobei das Verfahren computergestützt durchgeführt wird und eine Phase (510) der Auswahl von zulässigen stereoskopischen Paaren aus einer Anfangsmenge von Bildern, die das Interessengebiet darstellen, gefolgt von einer Phase (530) der Klassifizierung der ausgewählten stereoskopischen Paare in Abhängigkeit von ihrer Qualität umfasst, wobei das Verfahren **dadurch gekennzeichnet ist, dass** es ferner eine Phase (520) der Definition von N Bildclustern umfasst, wobei N eine ganze Zahl größer oder gleich 2 ist, die jeweils Bilder der Ausgangsmenge nach einem Ähnlichkeitskriterium gruppieren, und eine Phase (540) der Auswahl der besten stereoskopischen Paare pro Cluster auf der Grundlage der in der Klassifizierungsphase (530) aufgestellten Klassifizierung und der Tatsache, dass ein Paar zu einem Cluster gehört, wenn die beiden Bilder des Paars zu dem Cluster gehören.

2. Verfahren nach Anspruch 1, wobei das Ähnlichkeitskriterium einem Paar von Winkeln (θ, Φ) entspricht, wobei θ der Einfallswinkel der Bilder und Φ der Azimutwinkel ist.

3. Verfahren nach Anspruch 1 oder 2, wobei die Phase (520) der Clusterdefinition durch einen Algorithmus zur Partitionierung von Daten wie einen Algorithmus zur Affinitätspropagation durchgeführt wird.

4. Verfahren nach einem der vorhergehenden Ansprüche, wobei die Phase (540) der Auswahl der besten Paare pro Cluster darin besteht, die gleiche Anzahl von Paaren pro Cluster auszuwählen.

5. Verfahren nach einem der vorhergehenden Ansprüche, bei dem die besten Paare, die in der Phase (540) der Auswahl der besten Paare pro Cluster ausgewählt wurden, in einer abschließenden Liste (550) zusammengefasst werden.

6. Photogrammetrisches Verfahren, das ein Höhenmodell eines interessierenden Bereichs aus einem anfänglichen Satz von Bildern erzeugt, die den interessierenden Bereich abdecken, **dadurch gekennzeichnet, dass** es ein Verfahren (500) nach einem der Ansprüche 1 bis 5 umfasst.

7. System zur Berechnung von Höhendaten eines Interessengebiets aus einem Satz von Satelliten- oder Luftbildern, **dadurch gekennzeichnet, dass** es Rechenmittel (50) umfasst, die so konfiguriert sind, dass sie ein Verfahren (500) nach einem der Ansprüche 1 bis 5 durchführen.

8. Computerprogrammprodukt, das von einem Kommunikationsnetz heruntergeladen und/oder auf einem mikroprozessorlesbaren Medium gespeichert und/oder von einem Mikroprozessor (51) ausgeführt werden kann, **dadurch gekennzeichnet, dass** es Programmcodeanweisungen zur Ausführung eines Verfahrens (500) nach einem der Ansprüche 1 bis 5 umfasst.

9. Speichermedium (60), das von einem Endgerät lesbar und nicht transient ist und ein Computerprogramm speichert, das einen Satz von Anweisungen umfasst, die von einem Computer oder Prozessor ausgeführt werden können, um ein Verfahren (500) nach einem der Ansprüche 1 bis 5 auszuführen.

## Claims

1. A method (500) for selecting stereo pairs of satellite or aerial images to generate elevation data of a zone of interest, said method being implemented by computer and comprising a phase (510) of selecting eligible stereo pairs from an initial set of images representing the zone of interest, followed by a phase (530) of ranking the stereo pairs selected as a function of their quality, said method being **characterised in that** it further comprises a phase (520) of defining N image clusters, with N an integer greater than or equal to 2, each gathering images from the initial set according to a resemblance criterion, and a phase (540) of selecting the best stereo pairs per cluster on the basis of the ranking established during the ranking phase (530) and on the fact that a pair belongs to a cluster if both images of said pair belong to said cluster.

2. The method according to claim 1, wherein the resemblance criterion corresponds to a pair of angles ( 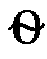 , Φ), with 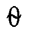 the angle of incidence of the images and Φ the azimuth angle.

3. The method according to claim 1 or 2, wherein the cluster definition phase (520) is performed by a data clustering algorithm such as an affinity propagation algorithm.

4. The method according to any of the preceding claims, wherein the phase (540) of selecting the best pairs per cluster consists in selecting the same number of pairs per cluster.

5. The method according to any of the preceding claims, wherein the best pairs selected during the phase (540) of selecting the best pairs per cluster are aggregated in a final list (550).

6. A photogrammetric method generating an elevation model of a zone of interest from an initial set of images covering said zone of interest, **characterised in that** it comprises a method (500) according to one of claims 1 to 5.

7. A system for calculating elevation data of a zone of interest from a set of satellite or aerial images, **characterised in that** it comprises calculation means (50) configured to implement a method (500) according to one of claims 1 to 5.

8. A computer program product downloadable from a communications network and/or stored on a medium readable by a microprocessor and/or executable by a microprocessor (51), **characterised in that** it comprises program code instructions for executing a method (500) according to one of claims 1 to 5.

9. A terminal-readable, non-transitory storage medium (60), storing a computer program comprising a set of instructions executable by a computer or processor to implement a method (500) according to one of claims 1 to 5.
